# EUROPEAN PATENT SPECIFICATION

(11) **EP 1 547 679 B1**
(45) Date of publication and mention of the grant of the patent: **25.05.2011**
(21) Application number: 03766422.4
(22) Date of filing: 31.07.2003
(51) Int. Cl.: B01J 19/10, B03B 5/02

(54) **SEPARATION OR EXTRACTION METHOD USING SUPERCRITICAL FLUIDS ASSISTED BY HIGH-INTENSITY ULTRASOUND**
TRENN- ODER EXTRAKTIONSVERFAHREN UNTER VERWENDUNG VON SUPERKRITISCHEN FLUIDEN MIT UNTERST TZUNG DURCH HOCHINTENSITûTSULTRASCHALL
PROCEDE DE SEPARATION OU D'EXTRACTION AU MOYEN DE FLUIDES SUPERCRITIQUES ASSISTE PAR ULTRASONS DE HAUTE INTENSITE

(30) Priority: 01.08.2002 ES 200201822
(43) Date of publication of application: 29.06.2005
(73) Proprietor: CONSEJO SUPERIOR DE INVESTIGACIONES CIENTIFICAS, 28006 Madrid (ES); UNIVERSIDAD POLITECNICA DE VALENCIA, 460022 Valencia (ES); Asociacion de Investigacion de la Industria Agroalimentaria, 46980 Paterna (Valencia) (ES)
(72) Inventor: RIERA FRANCO DE SARABIA, Enrique Fernando, 28006 Madrid (ES); GALLEGO JU REZ, Juan Antonio, 28006 Madrid (ES); MONTOYA VITINI, Fausto, 28006 Madrid (ES); BLANCO BLANCO, Alfonso, 28006 Madrid (ES); MULET PONS, Antonio, 46022 Valencia (ES); BENEDITO FORT, José J., 46022 Valencia (ES); PENA CERVERO , Ramon, 46022 Valencia (ES); GOLAS SANCHEZ, Yolanda, 46022 Valencia (ES); BERNA PRATS, Angel, Parque Tecnologico Valencia, 46980 Paterna, Valencia (ES); SUBIRATS HUERTA, Sebastián, 46980 Paterna, Valencia (ES); BLASCO PIQUER, Miguel, 46980 Paterna, Valencia (ES); GARCIA REVERTER, José, 46980 Paterna, Valencia (ES)
(74) Representative: Ungria Lopez, Javier
(86) International application number: PCT/ES2003/000398
(87) International publication number: WO 2004/012859

(56) References cited:
- EP-A1- 0 770 424
- ES-T3- 2 027 423
- FR-A1- 2 832 703
- FR-A1- 2 833 618
- US-A1- 2002 000 681
- US-A1- 2003 183 043

## Description

### SECTOR OF THE ART

The present invention relates to a method based on the application of high-intensity ultrasound in order to accelerate the processes of separation or extraction at high pressure (above around 70 bar) and with temperatures of up to 80 °C of natural products using CO₂ or other solvent under supercritical conditions or otherwise, without affecting the characteristics and quality of the resulting product. Said method presents applications in the agri-food, chemical, cosmetic and pharmaceutical fields.

### STATE OF THE ART

There currently exist various methods of extraction by means of supercritical fluids applied in the agri-food, chemical, cosmetic and pharmaceutical fields. So, one can cite extraction of coffee aromas starting from roasted and ground coffee using CO₂ as solvent under supercritical conditions (ES-216049-A1) (2001), the extraction of natural products starting from plant or animal sources crushed in a mixture of solvents with a proportion of the supercritical fluid of less than 50% (ES-2103238) (1997) and the extraction of natural anti-oxidising agents with low residual aroma starting from aromatic plants (ES-2128996-A1) (1999), etc. At the European and international level, one finds a good number of patents related to the use of supercritical or quasi-critical fluids for different ends apart from those mentioned, wherein carbon dioxide is the fluid most used though it is not the only one (water, propane, toluene, etc.). The oldest refer to the process of decaffeination of coffee (e.g. US-3806619, US-4322445, etc.) and to the separation, selective extraction or even polymerisation of components of petroleum and other fossil fuels (e.g. US-4341619, US-4465888, etc.), though in these fields recent patents have also appeared (EP-042579A1. EP-89-310933, US-4911941, US-229380, DE-4041097C1, etc.). There is also an important number of patents on obtaining fats or materials with a low content in fats, cholesterol, etc. (US-4331695, US-5147672, NZ87-221503, EP-0509432A2, JP91-110986, WO991/04678A1, CA-615387, EP-0367128A2, JP88-275419, etc.). There also exist protected processes on the obtaining of principles or extracts (WO 99/53002A1, US-5264236, JP-90-300376), fractionating of liquids (FR-2795087A1), sterilisation (DE-4337823A1), etc. Nevertheless, in spite of the diversity of applications and protected processes, there is no background in the existing bibliography of patents in which the application of high-intensity ultrasound is considered for reducing the duration of the extraction processes of natural products with supercritical fluids.

One of the main problems of a practical nature present in extraction processes with supercritical fluids is that of accelerating the extraction process, minimising times and, consequently, cutting the costs. These extraction times are generally long (in some cases they can reach up to 24 hours) due mainly to the fact that not only is the mass transferred in the processes being considered in extraction with supercritical fluids generally small but also to the actual resistance to transfer of matter in the process.

With the aim of reducing the resistance to transfer of matter, the classical procedure generally used for accelerating the separation or extraction processes with normal fluids is the application of a system of mechanical stirring. In the case of supercritical fluids, high pressures complicate the use of these systems. The installation of a device in continual movement inside a pressurised container involves designing complex locking systems that will simultaneously permit movement of the shaft and maintenance of the working pressure and temperature conditions by ensuring the sealing of the system. The design and construction of this type of system is delicate and presents serious difficulties, so it is necessary to consider other alternatives. The use of high-intensity ultrasonic waves in supercritical fluids can represent an effective manner of accelerating separation or extraction processes owing to non-linear effects, such as radiation pressure or acoustic currents, which are present during the propagation of this type of wave.

The only method published so far wherein supercritical fluids and ultrasound are combined for the first time refers to the controlled generation of nanoparticles and microparticles (US-2002000681) (2002). Nevertheless, this invention presents different objectives to those stated in the method proposed herein referring to the acceleration of separation and extraction processes of natural products by means of supercritical fluid or one close to the critical point (generally, CO₂) in the presence of high-intensity ultrasonic fields.

### DESCRIPTION

### Brief description

The subject-matter of independent claims 1 and that of the device claim 7 contains all the technical features necessary for the invention to be carried out. Optional features of the process are disclosed in the wording of dependent claims 2 to 6. Claim 8 contain optional technical features of the claimed device. Use claims 9, 10 define particular features of the claimed use.

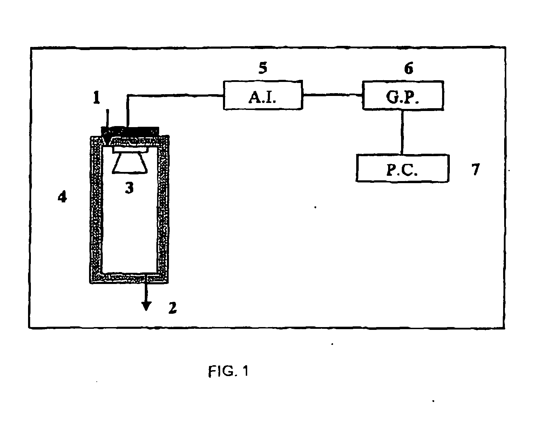

The method of the present invention proposes the application of high-intensity ultrasound (above 70 bar) in order to accelerate and improve the efficiency of the transfer process of matter (extraction, desolvatation, desorption, impregnation, reaction, etc.) in supercritical fluids, based on the process of separation by contact of a substance containing the extractable components with a solvent under supercritical conditions or conditions close to the critical point. For the application of this method, a device has been developed based on the generation of an intense stationary ultrasonic field inside a standard pressurised container for supercritical fluids, and which forms part of the present invention. The ultrasonic transducer is installed and integrated in the head of the container for supercritical fluids facing the basket where the material is deposited from which it is wished to extract the substance in particular. The internal configuration of the reactor, of the transducer and of the basket support for the material permits an ultrasonic stationary field of high-intensity to be established, which favours the generation of large acoustic currents of the supercritical fluid between the maxima and the nodes of the ultrasonic field (Figure 1). This, together with the microflows generated at the wavelength scale in the proximity of the solid-fluid interface, produces a notable increase in the extract obtained during the same period of time in the presence of power ultrasound.

### Detailed description of the invention

High-intensity ultrasonic waves are used as a means of action with the aim of producing permanent effects in the medium being treated. The application of power ultrasound in fluids and multiphase media constitutes a potential area that has not been sufficiently explored. This is probably due to problems relating to the complexity of the basic mechanisms involved and to the difficulties existing in the generation of high-intensity ultrasound.

The permanent effects produced in the medium treated by high-intensity ultrasonic waves are due primarily to a series of mechanisms tied to large amplitude pressure variations, such as: radiation pressure, acoustic currents, cavitation, heat, stirring, instabilities at the interfaces, friction, diffusion and mechanical fracture.

### Non-linear phenomena of power ultrasound

Radiation Pressure: When an accoustic-wave prepagates through a non-homogenous fluid medium in the presence of obstacles, forces are manifested which act on the obstacles and which are known by the name of radiation pressure. Radiation pressure is tied to any wave process and has its origins in the change of momentum undergone by the wave when it reaches the proximity of the obstacle. These forces are weak for waves of infinitesimal amplitude and are intense for acoustic waves with high power (macrosound) giving rise to drag and interaction processes.

*Acoustic Wind:* Another important non-linear effect generated by the propagation of high-intensity ultrasonic waves through a fluid is the generation of currents therein. These currents are produced both within the ultrasonic beam and in the proximity of obstacles. In the latter case the viscous limit layer around the obstacle plays an important role in the development of these currents. Outside the limit layer, in a progressive wave, the fluid flows from the source towards the medium via the centre of the beam and in the opposite direction at the periphery. In a stationary wave, a series of closed vortices are established between the maxima and the nodes. The acoustic wind seems to be induced primarily by the forces of radiation created by the absorption of acoustic waves in the medium. Other mechanisms such as diffraction and non-linearities of the acoustic field can also contribute to this effect.

The current generated in the interior of the limit layer close to the obstacle gives rise to vortices whose dimensions are determined by the thickness of the limit layer. The scale of the vortices in the ultrasonic beam depends on the confined volume where the beam is generally larger than the wavelength. The speed of the currents is less than the speed of the particle in an ultrasonic wave.

*Acoustic Cavitation:* This is defined as the formation, pulsation and collapse of cavities of gas or vapour in a liquid generated during the propagation of high-intensity waves. Applied to a liquid, high-intensity ultrasonic waves can produce small cavities or bubbles due to the fluctuations produced in the hydrostatic pressure. Two types of cavitation are considered: stable and transitory. The first, also known as rectified diffusion, is applied in order to ultrasonically degasify liquids: the bubbles grow in size, they trap gas dissolved in the liquid and they rise up towards the surface of the liquid in order to escape. The second, also known as inertial cavitation, is generated by very intense acoustic fields producing a violent collapse of the bubble capable of producing very high temperatures (> 10,000°C) and pressures (5,000 atmospheres) at a local level, which are very important in many effects of power ultrasonics. The high pressures cause erosion, dispersion and mechanical fracture, while the high temperatures are responsible for the effects of sonoluminescence and sonochemistry.

### Use of power ultrasonics in improving mass transfer in extraction or separation processes in supercritical fluids.

In the method of the present invention, the application of power ultrasonics is proposed in order to accelerate and improve extraction processes with supercritical fluids by means of exploiting the effects of diffusion and mass transfer that are produced in a fluid by the action of high-intensity ultrasound. One of the main difficulties in the application of supercritical fluids as a solvent for extraction is the slowness of the kinetics of the process. Another problem of the process is that it has a limited industrial application due to the difficulty in using mechanical stirring systems in order to increase the mass transfer coefficients due to the high pressures required when operating with fluids under supercritical conditions.

As we have just stated, the application of power ultrasonics produces effects of drag, interaction with obstacles, currents and microcurrents of fluid, decrease of the limit layer, etc., which, properly used, can lead to improving the mass transfer coefficients during the extraction.

### Developed experimental device

In order to study the effectiveness of the method proposed here, an experimental device has been developed based on the integration of a power ultrasound emitter into an autoclave/reactor/extractor (pressurised container) by means of supercritical fluids. The ultrasonic transducer constructed for a frequency of approximately 20 kHz was of the piezoelectric sandwich type (see E.A. Neppiras 1973 "The prestressed piezoelectric sandwich transducer" Ultrasonics International 73, Conference Proceedings, IPC Science and Technology Press, Guildford, Surrey, UK) which is well known in power applications. The extractor or pressurised container for supercritical fluids, used by way of example, has an approximate total volume of 6 L and approximate internal dimensions of 140 mm in diameter and 390 mm in height. The device can function in countercurrent or in parallel in relation to the acoustic field. This stainless steel extractor can work at pressures of up to 360 bar and temperatures between 35 and 100 °C. Other characteristics of pressurised containers can be used depending on the operating needs.

For the excitation of the transducers, a power generator has been designed and built with low impedance output and an impedance adaptation box in order to achieve the maximum transfer of energy between the electronic generator and the irradiated fluid. The transducers have been characterised simulating the real operating conditions in the laboratory with the aid of an impedance bridge. Later on, the prototypes in the extractor have been characterised under operating conditions with supercritical CO₂ at a temperature of 55 °C and 300 bars of pressure. Until the operating conditions are reached, the process of pressurisation and recirculation of the CO₂ in the extractor is highly unstable since the density of the gas changes with the pressure and temperature until reaching values similar to the density of the water. These variations affect the propagation speed of sound and therefore the acoustic impedance of the fluid medium. In order to stabilise the response of the transducer and of the power generating equipment designed and produced for the purpose, specific software was developed for measuring and controlling the parameters of the excitation signal and of the reactor.

By way of illustration, the layout of the embodied device is shown in Figure 1. In order to apply this method, a device has been developed based on the generation of an intense stationary ultrasonic field inside a standard pressurised container for supercritical fluids, and which forms part of the present invention. The ultrasonic transducer is installed and integrated into the head of the container for supercritical fluids facing the basket where the material from which it is wished to extract the particular substance is deposited. The internal configuration of the reactor, of the transducer and of the basket supporting the material permit a high-intensity stationary ultrasonic field to be established which favours the generation of large acoustic currents of the supercritical fluid between the maxima and the nodes of the ultrasonic field (Figure 1). This, together with the microflows generated at the wavelength scale in the proximity of the solid-fluid interface, produces a notable increase in the extract obtained during the same period of time in the presence of power ultrasound (see Example 1).

Moreover, the ultrasonic transducer has shown itself to be very sensitive to variations in density and flow of the circulating supercritical CO₂ (see Example 1), which permits its use simultaneously as a measuring instrument or sensor in the pressurised container at the pressure of the process conditions.

Furthermore, it can be pointed out that the ultrasonic transducer has to be high output for generation in fluids. In this sense, in order to obtain the maximum efficiency and for being able to act on any working volume, transducers of the staggered plate type (US-5299175, 1994) must be used. It is also possible to apply this method with sandwich or similar type transducers (French Patents 502913, 505703 and 575435), nevertheless, these are only valid for small size extractors.

Finally, forming part of the present invention is the use of the method described herein for the separation or extraction of natural products of use in fields such as, among others, agri-food, chemical, cosmetic and pharmaceutical.

### DESCRIPTION OF THE FIGURES

Figure 1. Experimental layout 1. Inlet/outlet for supercritical fluid 2. Inlet/outlet for supercritical fluid 3. Transducer 4. Pressurised container 5. Impedance adapter 6. Power generator 7. Measurement and control computer 8.
Figure 2. Extraction kinetics of almond oil with and without the application of ultrasound. Influence of particle size.

### EXAMPLES OF EMBODIMENT OF THE INVENTION

### Example 1.- Extraction of almond oil

The results of the experiment presented by way of example were conducted on natural almonds whole and chopped with different sizes of particles. The processes for extraction of oil with supercritical CO₂ with or without ultrasound were carried out during periods of 9 hours.

First of all, a study was made of the behaviour of the power ultrasonic transducer installed inside the extractor subjected to high pressures. The ultrasonic transducer showed itself to be very sensitive to variations in density and flow of circulating supercritical CO₂ which permits its use as a measuring instrument in the pressurised container. Once the operating conditions have been reached in the extractor, the response and behaviour of the transducer remain stable up to the end of the extraction process. In all the cases studied, the experimental results show that the application of power ultrasound produces a notable improvement both in extraction times and in the quantity of final product extracted per unit of material, and that this improvement depends on the particle size.

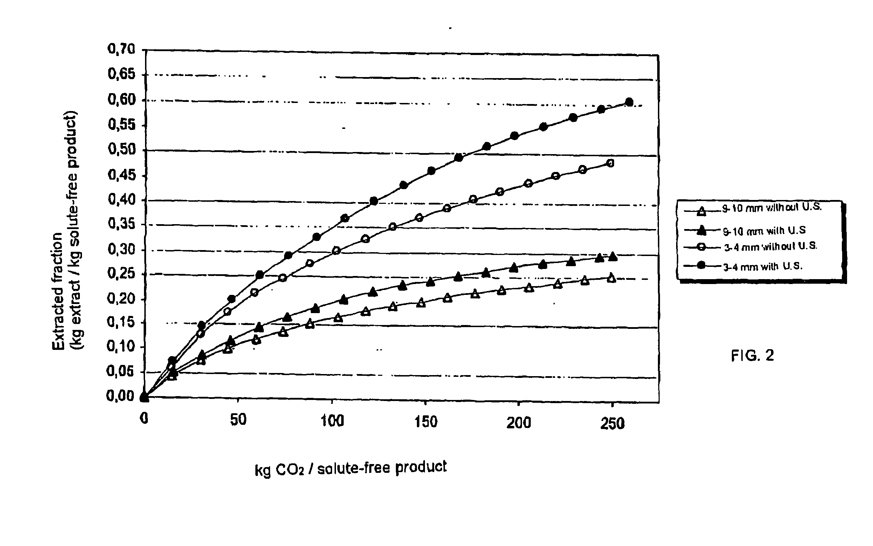

By way of example, Figure 2 shows the results of some experiments on almond oil, carried out with and without application of ultrasound at 280 bar and 55 °C, for different particle sizes. It can be seen that the application of ultrasound improved the extraction efficiency, being more appreciable the smaller the particle size. For a particle size 9-10 mm, the improvement was 15%, while for particles of 3-4 mm the percentage increased by approximately 20%.

## Claims

1. Method for improvement of mass transfer in supercritical fluids **characterised by** the simultaneous application of a solvent under supercritical or quasi-critical conditions and a high-intensity ultrasonic field generated in the interior of the pressurised container by means of a power ultrasonic transducer, for use with a solid substance containing extractable components.

2. Method according to claim 1 **characterised in that** it comprises the use of a stationary ultrasonic field.

3. Method according to claims 1 or 2 **characterised in that** it comprises the use of ultrasonic transducers of the staggered plate type.

4. Method according to any of claims 1 to 3 **characterised in that** an electronic generator for excitation of the transducer is fitted with a control system for the excitation signal.

5. Method according to any of claims 1 to 4 **characterised in that** the power ultrasound emitter is also used as a sensor for the characterisation of the process conditions in the pressurised container.

6. Method according to any of claims 1 to 5, **characterised in that** said method of mass transfer is selected form among extraction, desolvatation, desorption, impregnation and reaction.

7. Device for carrying out the method for mass transfer defined in claim 1, **characterised by** comprising:
- a measurement and control computer,
- a power generator,
- an impedance adapter, and
- a pressurised container comprising a basket where a solid material is deposited facing an ultrasonic transducer of the staggered plate type, installed and integrated in the head of the container for supercritical fluids, fitted with a specific software developed for measuring and controlling the parameters of the excitation signal and of the reactor, an inlet for supercritical fluid and an outlet for supercritical fluid.

8. Device according to claim 7, **characterised in that** said pressurised container is selected from among an autoclave, a reactor and an extractor.

9. Use of the method according to any of claims 1 to 5 for the separation or extraction of natural products.

10. Use of a method according to claim 9, **characterised in that** said natural products are selected from among agri-food, chemicals, cosmetics and pharmaceuticals.

## Patentansprüche

1. Verfahren zur Verbesserung von Stoffübergang in überkritischen Fluiden, **gekennzeichnet durch** die gleichzeitige Anwendung eines Lösungsmittels unter überkritischen oder quasikritischen Bedingungen und eines intensitätsstarken Ultraschallfelds, erzeugt im Inneren des unter Druck stehenden Behälters mittels eines Energie-Ultraschall-Transducers, zur Verwendung mit einer festen Substanz, welche extrahierbare Bestandteile enthält.

2. Verfahren gemäß Anspruch 1, **dadurch gekennzeichnet, dass** es die Verwendung eines stationären Ultraschallfelds umfasst.

3. Verfahren gemäß Ansprüchen 1 oder 2, **dadurch gekennzeichnet, dass** es die Verwendung von Ultraschall-Transducern des Typs mit gestaffelter Platte umfasst.

4. Verfahren gemäß einem von Ansprüchen 1 bis 3, **dadurch gekennzeichnet, dass** ein elektronischer Generator zur Anregung des Transducers mit einem Regelungssystem für das Anregungssignal ausgerüstet ist.

5. Verfahren gemäß einem von Ansprüchen 1 bis 4, **dadurch gekennzeichnet, dass** der Energie-Ultraschall-Strahler auch als Sensor für die Kennzeichnung der Prozessbedingungen in dem unter Druck stehenden Behälter verwendet wird.

6. Verfahren gemäß einem von Ansprüchen 1 bis 5, **dadurch gekennzeichnet, dass** besagtes Stoffübergangsverfahren ausgewählt ist aus Extraktion, Desolvatation, Desorption, Imprägnierung und Umsetzung.

7. Vorrichtung zum Durchführen des Verfahrens für Stoffübergang, welches in Anspruch 1 definiert ist, **gekennzeichnet**, indem es umfasst:
- einen Mess- und Regelungscomputer,
- einen Energie-Generator,
- einen Impedanz-Adapter und
- einen unter Druck stehenden Behälter, welcher einen Korb umfasst, wo ein festes Material abgelagert wird, einem Ultraschall-Transducer des Typs mit gestaffelter Platte zugewandt, installiert und integriert in den Kopf des Behälters für überkritische Fluide, ausgerüstet mit einer spezifischen Software, entwickelt zum Messen und Regeln der Parameter des Anregungssignals und des Reaktors, einem Einlass für überkritisches Fluid und einem Auslass für überkritisches Fluid.

8. Vorrichtung gemäß Anspruch 7, **dadurch gekennzeichnet, dass** besagter unter Druck stehender Behälter ausgewählt ist aus einem Autoklav, einem Reaktor und einem Extraktor.

9. Verwendung des Verfahrens gemäß einem von Ansprüchen 1 bis 5 zur Trennung oder Extraktion von natürlichen Produkten.

10. Verwendung eines Verfahrens gemäß Anspruch 9, **dadurch gekennzeichnet, dass** besagte natürliche Produkte ausgewählt sind aus Agrar-Nahrungsmitteln, Chemikalien, Kosmetika und Pharmazeutika.

## Revendications

1. Procédé d'amélioration du transfert de masse dans des fluides supercritiques, **caractérisé par** l'application simultanée d'un solvant dans des conditions supercritiques ou quasi-critiques et d'un champ d'ultrasons de haute intensité, généré à l'intérieur du conteneur pressurisé à l'aide d'un transducteur puissant à ultrasons, à utiliser avec une substance solide contenant les composants extractibles.

2. Procédé selon la revendication 1, **caractérisé en ce qu'**il comprend l'utilisation d'un champ ultrasonore stationnaire.

3. Procédé selon les revendications 1 ou 2, **caractérisé en ce qu'**il comprend l'utilisation de transducteurs à ultrasons du type à plaques décalées.

4. Procédé selon l'une quelconque des revendications 1 à 3, **caractérisé en ce qu'**un générateur électronique pour l'excitation du transducteur est équipé d'un système de contrôle pour le signal d'excitation.

5. Procédé selon l'une quelconque des revendications 1 à 4, **caractérisé en ce que** l'émetteur puissant d'ultrasons est également utilisé comme capteur pour la caractérisation des conditions du processus dans le conteneur pressurisé.

6. Procédé selon l'une quelconque des revendications 1 à 5, **caractérisé en ce que** ledit procédé de transfert de masse est choisi parmi l'extraction, la désolvatation, la désorption, l'imprégnation et la réaction.

7. Dispositif pour réaliser le procédé de transfert de masse défini à la revendication 1, **caractérisé en ce qu'**il comprend :
- un ordinateur de mesure et de contrôle ;
- un générateur d'énergie ;
- un adaptateur d'impédance, et
- un conteneur pressurisé comprenant un panier, dans lequel un matériau solide est déposé en face d'un transducteur à ultrasons de type à plaques décalées, installé et intégré dans la tête du conteneur pour les fluides supercritiques, équipé d'un logiciel spécifique, développé pour mesurer et contrôler les paramètres du signal d'excitation et du réacteur, une entrée pour le fluide supercritique et une sortie pour le fluide supercritique.

8. Dispositif selon la revendication 7, **caractérisé en ce que** ledit conteneur pressurisé est choisi parmi un autoclave, un réacteur et un extracteur.

9. Utilisation du procédé selon l'une quelconque des revendications 1 à 5, pour la séparation ou l'extraction de produits naturels.

10. Utilisation d'un procédé selon la revendication 9, **caractérisé en ce que** lesdits produits naturels sont choisis parmi des composés agroalimentaires, chimiques, cosmétiques et pharmaceutiques.
